# FASCICULE DE BREVET EUROPEEN

(11) **EP 1 205 604 B1**
(45) Date de publication et mention de la délivrance du brevet: **12.10.2005**
(21) Numéro de dépôt: 01402813.8
(22) Date de dépôt: 30.10.2001
(51) Int. Cl.: E02B 15/10

(54) **Procédé et installation de récupération d'une nappe flottant à la surface d'une liquide**
Verfahren und Vorrichtung zum Aufnehmen einer Schwimmschicht von einer Flüssigkeit
Process and device for collecting a floating layer on a liquid surface

(30) Priorité: 09.11.2000 FR 0014385
(43) Date de publication de la demande: 15.05.2002
(73) Titulaire: SORELEC, 45800 Saint Jean de Braye (FR)
(72) Inventeur: Djelouah, Salah, 45550 Saint-Denis de L'Hotel (FR)
(74) Mandataire: Cabinet HERRBURGER

(56) Documents cités:
- WO-A-97/32087
- FR-A- 2 219 672
- US-A- 3 635 342
- US-A- 3 753 496

## Description

### Domaine de l'invention

La présente invention concerne une installation de récupération d'une nappe flottant à la surface de l'eau telle qu'une nappe de pétrole telle que définie dans le préambule de la première revendication.

### Etat de la technique

On connaît différents procédés et installations pour récupérer le produit d'une nappe flottant à la surface de l'eau et, en particulier, d'une nappe de pétrole flottant en mer.

Ces procédés et installations connus sont très divers, allant de barrages flottants à des stockages flottants ou des récupérateurs. Les récupérateurs sont classés en deux types, les récupérateurs mécaniques faisant appel aux propriétés d'écoulement fluide et de la densité du liquide à récupérer et les récupérateurs oléophiles destinés plus particulièrement à la récupération du pétrole et qui utilisent les propriétés d'adhérence du pétrole sur des surfaces amenées au contact de l'eau et du polluant.

Ce classement est publié dans une étude du CEDRE (Centre de documentation de recherche et d'expérimentations sur les pollutions accidentelles des eaux) intitulée « La récupération du pétrole en mer » (extrait du stage INFOPOL organisé par le CEDRE en 1999).

Les récupérateurs mécaniques utilisent soit l'aspiration directe, soit l'aspiration à déversoir ou encore une bande transporteuse simple ou une bande transporteuse travaillant par submersion.

Les récupérateurs oléophiles sont, en général, constitués par un ensemble de disques, de tambours ou un équipement à courroies ou à cordes, qui pénètrent dans la nappe et profitent de l'adhérence du pétrole sur la structure des disques, des tambours, des courroies ou des cordes pour y accrocher le produit, le transporter et l'évacuer. L'enlèvement se fait, en général, par raclage ou essorage.

Parmi les récupérateurs mécaniques, il existe un récupérateur dit à vortex constitué par une tête de pompage ou crépine venant par-dessus la nappe à pomper, au niveau de celle-ci. Sous la tête de pompage, une hélice crée une dépression en formant un vortex statique de manière à accumuler le produit moins dense que l'eau pour le concentrer sous la crépine.

En fait, cette installation utilise une hélice pour créer, sous la tête d'aspiration, une poche dans laquelle s'accumule le liquide à pomper.

Selon l'analyse faite dans ce document et résumant les essais, cette installation est très délicate à utiliser et convient uniquement pour des produits fluides en eaux calmes. Ce procédé et cette installation ne permettent pas de pomper des produits en partie solides puisque le pompage se fait par le haut, dans la direction opposée à la direction dans laquelle le vortex statique crée la dépression formant la poche.

En d'autres termes, le vortex statique et l'effet d'aspiration de pompage agissent dans des directions opposées.

Ce procédé ne peut s'utiliser lorsque la surface de l'eau est agitée car, alors, la pénétration de l'air dans la tête de pompage risque de désamorcer la pompe.

Le document US 3 635 342 décrit une installation de récupération d'une nappe de pétrole flottant à la surface de l'eau. Cette installation comporte une tête de récupération formée d'une enceinte dont la partie haute est munie d'une entrée pour recevoir le produit à récupérer. Cette enceinte est munie d'une sortie de produit sous la forme d'un tube d'aspiration, remontant dans l'enceinte jusque sous l'entrée. Cette enceinte est également équipée d'une hélice immergée dans le liquide de l'enceinte pour créer un vortex descendant permettant de former une poche de liquide à récupérer. Cette poche se forme au dessus de l'hélice. Cette installation qui, à priori, ne doit récupérer que le produit de la poche formé dans le vortex, est d'un réglage délicat car le produit de la poche est pompé dans celle-ci par une pompe, le vortex créant simplement la poche puisque ce vortex est formé principalement par l'eau. Ce vortex ne propulse pas le liquide à récupérer dans la conduite, la récupération se faisant uniquement par la pompe. Cette installation n'a pas pour objectif de séparer de manière précise le liquide à récupérer de l'eau sur lequel il surnage car l'installation est accrocher au fond de l'eau.

Ainsi suivant l'épaisseur de la nappe de liquide et le débit de la pompe, une partie plus ou moins importante d'eau sera entraînée avec le liquide.

L'efficacité de cette installation est très théorique à cause des problèmes de mise au point du fonctionnement.

En résumé, cette installation crée par effet de vortex ou d'aspiration par venturi, dans les différents modes de réalisation envisagés, une poche dans l'eau, poche dans laquelle arrive le liquide à récupérer pour être pompé dans cette poche.

Il existe également une installation décrite au document US 3 753 496. Ce document décrit en fait deux modes de réalisation différant l'un de l'autre par la façon de récupérer le liquide.

Ces deux modes de réalisation ont en commun une tête de récupération en forme d'entonnoir dont l'entrée est munie d'aubes fixes, en spirale, pour favoriser la régularité de l'arrivée du produit dans cette tête de récupération en forme d'entonnoir. Dans un mode de réalisation, l'extrémité inférieure de cet entonnoir est reliée à une conduite d'aspiration. Dans un autre mode de réalisation, cette extrémité est bouchée pour former une bâche dans laquelle plonge une pompe aspirante, récupérant le liquide à cet endroit.

Mais cette installation, sous ces deux modes de réalisation, aspire un mélange d'eau et de produit à récupérer (pétrole) sans chercher à séparer efficacement l'eau et le liquide à récupérer pour réduire le volume de produit à traiter en aval.

En d'autres termes, dans ce document, il n'est nullement question de chercher à séparer dans l'installation, le liquide à récupérer et l'eau sur laquelle surnage ce liquide.

### But de l'invention

La présente invention a pour but de remédier aux inconvénients des solutions connues et se propose de développer une installation permettant de pomper de manière extrêmement efficace des nappes de produit flottant à la surface de l'eau et cela quelle que soit la nature physique des produits (état fluide, semi-fluide ou même partiellement solidifié), et quelles que soient les caractéristiques du lieu de la nappe flottante, que celle-ci soit soumise à la houle, au vent, à des courants de surface ou encore l'endroit où se situe la nappe sans pomper l'eau sur laquelle flottent ces nappes pour augmenter l'efficacité de la récupération.

A cet effet, l'invention concerne une installation selon les caractéristiques de la partie caractérisante de la première revendication.

Le vortex selon l'invention fait circuler le flux de produit prélevé de la nappe pour l'évacuer.

L'installation génère un vortex dynamique, c'est-à-dire un vortex qui produit une circulation de fluide de haut en bas, de l'entrée du récupérateur vers sa sortie et non pas une simple dépression statique créant une poche chargée de produit de densité moindre que celle du liquide dans lequel flotte normalement la nappe de produit, c'est-à-dire l'eau douce ou l'eau de mer.

Cette aspiration s'ajoutera alors à l'impulsion communiquée au fluide au niveau du vortex.

La récupération de produit peut se faire d'une manière très largement indépendante de la nature physique du produit récupéré, que celui-ci soit liquide, plus ou moins pâteux ou même s'il contient des particules ou des parties solides.

L'installation permet de récupérer même des particules solides flottant à la surface de la nappe, puisque ces particules seront entraînées dans le vortex et de là évacuées.

De façon avantageuse, l'hélice créant le vortex est immergée à une hauteur réglable dans l'enceinte de la nappe flottante, ce qui permet d'adapter l'effet de vortex à la nature des produits à récupérer.

La forme de trémie ou d'entonnoir de l'enceinte favorise l'écoulement de la nappe de produit dans le vortex, sans créer de zones mortes qui seraient occupées par du produit ou de l'eau.

La liaison entre les flotteurs et l'enceinte soit réglable permet de régler la profondeur d'immersion de l'entrée de l'enceinte en fonction de l'épaisseur de la nappe de produit à récupérer sans aspirer l'eau.

Cette mise en place flottante de l'installation permet de suivre les variations de hauteur de la nappe notamment en fonction de la houle.

De façon avantageuse, la sortie de l'enceinte est reliée à une conduite d'évacuation munie d'un moyen d'aspiration. Cette conduite d'évacuation peut avoir une certaine longueur en fonction de la disposition des différents moyens de l'installation et notamment de la tête de récupération et des réservoirs recueillant le produit.

Dans le cas d'une conduite d'évacuation reliée à un moyen d'aspiration tel qu'une pompe, il est intéressant qu'une unité de commande soit reliée au moteur du générateur du vortex et au moyen d'aspiration pour coordonner le fonctionnement de ces deux moyens et permettre un rendement optimum.

De façon avantageuse, le moyen de flottaison formé de flotteurs portant l'enceinte et le générateur de vortex ne constitue pas une barrière fermée placée au-dessus de l'enceinte ou entourant celle-ci. Au contraire, il s'agit uniquement de points d'appui séparés laissant des passages entre eux pour permettre non seulement à la nappe mais également à la surface de la nappe de pénétrer dans l'enceinte pour être prise par le vortex.

De façon générale, l'installation selon l'invention constitue un moyen extrêmement simple à mettre en oeuvre, susceptible de fonctionner dans des conditions extrêmes à la fois pour la situation de la nappe à récupérer ou de la nature des produits. Enfin, l'installation est particulièrement simple à entretenir, à mettre en oeuvre et elle est peu encombrante.

### Dessins

La présente invention sera décrite ci-après de manière plus détaillée à l'aide des dessins annexés dans lesquels :
- la figure 1 est un schéma d'une installation connue,
- la figure 2 est un schéma de l'installation selon l'invention,
- la figure 3 montre un détail de l'installation de la figure 2,
- la figure 4 montre l'installation selon l'invention en position de fonctionnement.

### Description d'un mode de réalisation

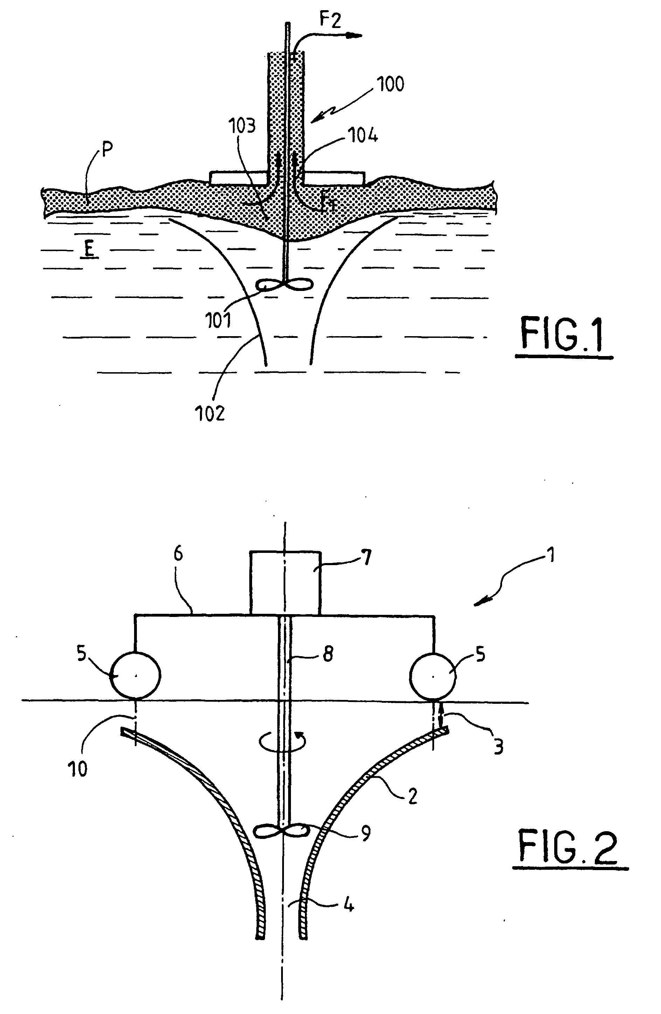

Selon la figure 1, une installation connue dite à vortex, de récupération mécanique de produit P flottant sous la forme d'une nappe à la surface de l'eau E, se compose d'une tête d'aspiration 100, placée à la surface de la nappe P. Cette tête d'aspiration 100 comporte une hélice 101, entraînée par un moteur non représenté, est logée dans un caisson 102 en forme de trompette entourant l'hélice 101. L'hélice 101 crée une dépression à l'intérieur du caisson 102 pour former une poche 103 sous l'entrée 104 de la tête d'aspiration 100, pour y accumuler une épaisseur de produit P permettant le pompage. Le produit P est pompé comme l'indiquent les flèches F1, F2.

Dans cette installation connue, l'hélice 101 crée une sorte de vortex statique formant la poche dans laquelle s'accumule du produit P ; Celui-ci peut alors être aspiré. Mais comme déjà indiqué cette aspiration est opposée à l'aspiration créée par le vortex statique.

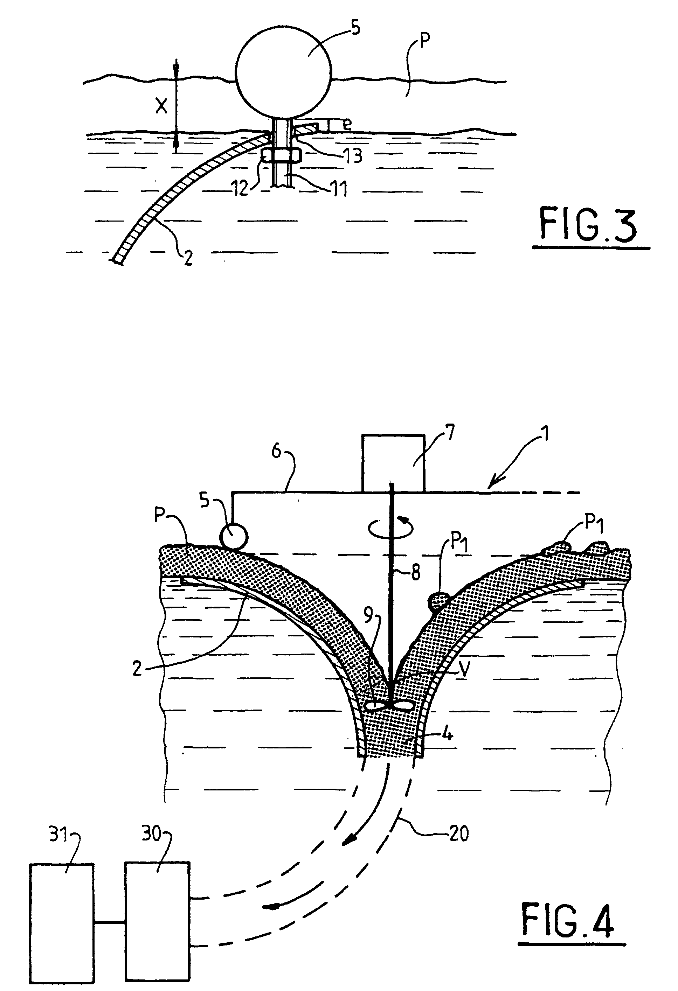

La présente invention concerne une installation telle que représentée aux figures 2 et 3 et en position de fonctionnement à la figure 4.

Selon la figure 2, l'installation se compose d'une tête de récupération 1, formée d'une enceinte 2 ayant en partie haute, une entrée 3 et en partie basse, une sortie 4. Cette tête 1 est portée par un moyen de flottaison constitué par des flotteurs 5 solidaires d'un châssis 6. Le châssis 6 porte également un moteur 7 dont l'arbre 8 est muni d'une hélice 9 constituant un générateur de vortex. Cette hélice 9 crée un vortex dynamique dans l'enceinte 2 qui a, de préférence, une forme de trompette selon les lignes de flux d'un vortex.

L'enceinte 2 est reliée au bâti 5, 6 par l'intermédiaire d'organes de liaison 10, de longueur réglable. Ces organes de liaison sont représentés reliés aux flotteurs 5. Ils pourraient également être reliés directement au châssis 6. Ces organes de liaison 10 de longueur réglable permettent de modifier la profondeur (e) d'immersion du bord de l'enceinte 2 constituant l'entrée 3. Ce réglage se fait en fonction de l'épaisseur X de la nappe de produit P à récupérer (voir figure 3).

Comme moyen de réglage, on a, dans cet exemple particulier, une tige filetée 11, reliée au flotteur 5 et munie d'un écrou 12 pour tenir le bord 13 de l'enceinte 2. On définit ainsi la hauteur (e) de l'ouverture 3.

La figure 4 montre l'installation selon l'invention en position d'utilisation.

La tête de récupération est placée dans une nappe de produit P et s'appuie sur la nappe, et plus généralement à la surface du liquide, par l'intermédiaire de ses flotteurs 5. Ces flotteurs 5 ne constituent pas un anneau entourant le dessus de l'enceinte 2 mais ils forment des appuis répartis à la surface de la nappe ou du liquide comme cela est indiqué à la figure 4 dans laquelle, contrairement à la figure 2, le flotteur droite 5 n'a pas été représenté.

Il est extrêmement important que le ou les flotteurs 5 ne constituent pas une barrière fermée s'étendant sur au-dessus de l'entrée de l'enceinte 2 pour ne pas obliger la nappe de produit P à passer nécessairement sous tous les flotteurs 5.

Au contraire et comme cela est représenté dans la partie droite de la figure 4, des produits plus ou moins solides P1 peuvent flotter eux-mêmes à la surface de la nappe P. Il peut s'agir de particules P1 de produits plus ou moins solidifié. Toutes ces particules même flottant en surface peuvent pénétrer dans l'enceinte 2, aspirées par le vortex dynamique crée par l'hélice 9.

Cela signifie que l'hélice 9 crée non seulement une dépression dans l'enceinte 2 mais un vortex V, schématisé à la figure 4, qui arrive au moins jusqu'à la sortie 4 de l'enceinte 2.

Ce vortex dynamique aspire la couche supérieure du liquide dans lequel flotte la tête de récupération 1 et qui est principalement constituée par la nappe de produit P.

La sortie 4 de l'enceinte 2 est reliée à une conduite 20 pour l'évacuation du produit. Cette conduite 20 est, de préférence, reliée à une pompe 30 qui débite le liquide vers un réservoir 31.

Ainsi, selon le procédé de l'invention pour récupérer le produit formant une nappe à la surface de l'eau telle qu'une nappe de pétrole, on crée un vortex dynamique sous la surface de la nappe flottante ; on alimente ce vortex avec la nappe en, retenant principalement le liquide sur lequel flotte le produit à récupérer et on évacue le produit, éventuellement avec du liquide, par la base du vortex.

Cette évacuation se fait dans le même sens d'action que celle du vortex.

En particulier, on aspire le produit avec éventuellement du liquide, à la base du vortex. Cette aspiration s'ajoute à l'effet d'aspiration ou de poussée du vortex. Ce procédé permet de récupérer le produit P flottant à la surface du liquide E, pratiquement quel que soit l'état du produit P, liquide, plus ou moins visqueux et même contenant des particules solides. Même si la surface de la nappe de produit P est plus ou moins agitée, cette nappe peut se récupérer efficacement par le vortex actif.

## Revendications

1. Installation de récupération du produit formant une nappe flottant à la surface de l'eau telle qu'une nappe de pétrole, comprenant
- une tête de récupération (1) formée d'une enceinte (2) ayant une entrée (3), en partie haute pour le produit à récupérer et une sortie du produit récupéré,
- un générateur de vortex formé d'une hélice (9) immergée dans l'enceinte et portée par l'arbre (8) d'un moteur (7), créant dans l'enceinte un vortex (V) descendant ,
- un moyen de flottaison (5) soutenant l'enceinte (2),
- une conduite (20) reliant l'enceinte à un réservoir (31),
**caractérisée en ce que**
- l'enceinte (2) est une trémie épousant les lignes de flux du vortex, dont la partie évasée constitue l'entrée (3) du produit, et en partie basse (4), le sommet du cône constitue la sortie (4), cette sortie étant reliée à la conduite d'évacuation (20), du produit récupéré
- le générateur de vortex forme un vortex dynamique descendant (V) dans l'enceinte (2) jusqu'à sa sortie, et
- la liaison (10) entre les flotteurs (5) et l'enceinte (2) est réglable pour régler la profondeur d'immersion de l'entrée (3) de l'enceinte en fonction de l'épaisseur (X) de la nappe de produit à récupérer (P).

2. Installation selon la revendication 1,
**caractérisée en ce que**
l'hélice (9) est immergée à une hauteur réglable dans l'enceinte sous le niveau de la nappe flottante (P).

3. Installation selon la revendication 1,
**caractérisée en ce que**
la conduite d'évacuation (20) est reliée à un moyen d'aspiration (30).

4. Installation selon l'une quelconque des revendications 1 et 3,
**caractérisée par**
une unité de commande reliée au moteur (7) du générateur de vortex (7, 8, 9) et au moyen d'aspiration (30) pour commander ces deux moyens l'un en fonction de l'autre.

5. Installation selon la revendication 1,
**caractérisée en ce que**
le moyen de flottaison (5) est formé de flotteurs portant l'enceinte (2) et le générateur de vortex (7, 8, 9).

## Patentansprüche

1. Vorrichtung zum Aufnehmen eines Produkts, das eine Schwimmschicht an der Wasseroberfläche bildet, wie z.B. eine Erdölschicht, umfassend:
- einen Aufnahmekopf (1), gebildet durch eine Einfassung (2) mit einem Einlass (3) am oberen Teil für das aufzunehmende Produkt und einen Auslass für das aufgenommene Produkt,
- einen Wirbelgenerator, gebildet aus einer Schraube (9), die in die Einfassung eingetaucht ist und von der Welle (8) eines Motors (7) getragen wird und die in der Einfassung einen absteigenden Wirbel (V) bildet,
- ein Schwimmmittel (5), das die Einfassung (2) trägt,
- eine Leitung (20), welche die Einfassung mit einem Reservoir (31) verbindet,
**dadurch gekennzeichnet, dass**
- die Einfassung (2) ein Trichter ist, der sich an die Strömungslinien des Wirbels anpasst und dessen konisch erweiterter Teil den Einlass (3) für das Produkt darstellt, und dass am unteren Teil (4) die Spitze des Kegels den Auslass (4) bildet, wobei dieser Auslass mit der Abflussleitung (20) für das aufgenommene Produkt verbunden ist,
- der Wirbelgenerator in der Einfassung (2) bis zu ihrem Auslass einen absteigenden dynamischen Wirbel (V) bildet, und
- die Verbindung (10) zwischen den Schwimmern (5) und der Einfassung (2) einstellbar ist, um die Eintauchtiefe des Einlasses (3) der Einfassung in Abhängigkeit von der Stärke (X) der aufzunehmenden Produktschicht (P) einzustellen.

2. Vorrichtung nach Anspruch 1, **dadurch gekennzeichnet, dass** die Schraube (9) in einer einstellbaren Höhe in die Einfassung unter das Niveau der Schwimmschicht (P) eingetaucht ist.

3. Vorrichtung nach Anspruch 1, **dadurch gekennzeichnet, dass** die Abflussleitung (20) mit einem Ansaugmittel (30) verbunden ist.

4. Vorrichtung nach einem der Ansprüche 1 und 3, **gekennzeichnet durch** eine Steuereinheit, die mit dem Motor (7) des Wirbelgenerators (7, 8, 9) und mit dem Ansaugmittel (30) verbunden ist, um diese beiden Mittel in Abhängigkeit voneinander zu steuern.

5. Vorrichtung nach Anspruch 1, **dadurch gekennzeichnet, dass** das Schwimmmittel (5) aus Schwimmern gebildet ist, welche die Einfassung (2) und den Wirbelgeneratur (7, 8, 9) tragen.

## Claims

1. Device for collecting a product forming a floating layer on the surface of water, such as a layer of oil, comprising
- a collecting head (1) formed by an enclosure (2) having an inlet (3) in its upper portion for the product to be collected and having an outlet for the collected product,
- a vortex generator formed by a helix (9) which is immersed in the enclosure and is carried by the shaft (8) of an engine (7), creating a descending vortex (V) in the enclosure,
- a flotation means (5) which supports the enclosure (2),
- a pipe (20) which connects the enclosure to a reservoir (31),
**characterised in that**
- the enclosure (2) is a cone which follows the flux lines of the vortex, the widened portion of which cone constitutes the inlet (3) for the product and, in its lower portion (4), the top of the cone constitutes the outlet (4), the outlet being connected to the outlet pipe (20) for the collected product,
- the vortex generator forms a dynamic vortex (V) which descends in the enclosure (2) to its outlet, and
- the connection (10) between the floats (5) and the enclosure (2) is adjustable in order to regulate the depth of immersion of the inlet (3) of the enclosure as a function of the thickness (X) of the layer of product to be collected (P).

2. Device according to claim 1,
**characterised in that**
the helix (9) is immersed in the enclosure to an adjustable height beneath the level of the floating layer (P).

3. Device according to claim 1,
**characterised in that**
the outlet pipe (20) is connected to a suction means (30).

4. Device according to any one of claims 1 to 3,
**characterised by**
a control unit which is connected to the motor (7) of the vortex generator (7, 8, 9) and to the suction means (30) in order to control those two means one as a function of the other.

5. Device according to claim 1,
**characterised in that**
the flotation means (5) is formed by floats which carry the enclosure (2) and the vortex generator (7, 8, 9).
